(19) Europäisches Patentamt
European Patent Office
Office européen des brevets

(11) **EP 4 170 560 A1**

(12) **EUROPEAN PATENT APPLICATION**
published in accordance with Art. 153(4) EPC

(43) Date of publication:
**26.04.2023 Bulletin 2023/17**

(21) Application number: **21911330.5**

(22) Date of filing: **08.12.2021**

(51) International Patent Classification (IPC):
***G06N 20/00*** (2019.01)    ***G06N 5/02*** (2023.01)

(52) Cooperative Patent Classification (CPC):
**G06N 5/02; G06N 20/00**

(86) International application number:
**PCT/KR2021/018552**

(87) International publication number:
**WO 2022/139263 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 KR 20200182652**

(71) Applicant: **LG Energy Solution, Ltd.
Seoul 07335 (KR)**

(72) Inventor: **LIM, Bo Mi
Daejeon 34122 (KR)**

(74) Representative: **Plasseraud IP
66, rue de la Chaussée d'Antin
75440 Paris Cedex 09 (FR)**

(54) **MACHINE LEARNING TRAINING APPARATUS AND OPERATION METHOD THEREFOR**

(57)    Provided is a machine learning training apparatus including a data managing unit configured to collect new data, a data analyzing unit configured to extract a feature of data used for generation of a machine learning model and a feature of the new data, and a determining unit determining whether a number of pieces of the new data is less than a reference number and determining whether to apply the new data to the machine learning model using different methods according to the number of pieces of the new data.

FIG.1

**Description**

**[TECHNICAL FIELD]**

CROSS REFERENCE TO RELATED APPLICATION

The present application claims priority to Korean Patent Application No. 10-2020-0182652, filed on December 23, 2020, the entire contents of which is incorporated herein for all purposes by this reference.

TECHNICAL FIELD

Embodiments disclosed herein relate to a machine learning training apparatus and an operating method thereof.

**[BACKGROUND ART]**

Machine learning refers to a technique for predicting a certain result by training a computer. Generally, result prediction using machine learning includes a process of preparing train data for training a machine and training the computer in a manner suitable for a problem, a process of validating a model with test data, and a process of predicting a result with a model having passed the verification.

A machine learning model is generated using train data selected according to a certain criterion. When trying to predict a result by inputting new data to a machine learning model generated based on selected data, in the case of a low relationship between a feature to be generalized through machine learning and a feature of the new data, an error of the model, apart from the accuracy of the model, increases due to the difference therebetween, degrading the reliability of the model.

**[DISCLOSURE]**

**[TECHNICAL PROBLEM]**

The present disclosure provides a machine learning training apparatus and an operating method thereof, by which an error of a machine learning model may be reduced and a reliability of the machine learning model may be improved.

Technical problems of the embodiments disclosed herein are not limited to the above-described technical problems, and other unmentioned technical problems would be clearly understood by one of ordinary skill in the art from the following description.

**[TECHNICAL SOLUTION]**

According to an aspect of the present disclosure, there is provided a machine learning training apparatus including a data managing unit configured to collect new data, a data analyzing unit configured to extract a feature of data used for generation of a machine learning model and a feature of the new data, and a determining unit configured to determine whether a number of pieces of the new data is less than a reference number and determine whether to apply the new data to the machine learning model using different methods according to the number of pieces of the new data.

According to an embodiment, when the number of pieces of the new data is less than the reference number, the determining unit determines whether to apply the new data to the machine learning model by performing bounds checking and a trend test with respect to the feature of the new data and the feature of the data used for generation of the machine learning model.

According to an embodiment, the trend test may determine whether a coefficient of an equation obtained from a graph showing a change in the feature of the new data over time falls within a range of a coefficient of an equation obtained from a graph showing a change in the feature of the data used for generation of the machine learning model.

According to an embodiment, the determining unit may apply the new data to training of the machine learning model, when determining that the feature of the new data falls within a trend range of the feature of the data used for generation of the machine learning model as a result of performing the trend test and determining that the feature of the new data falls within a boundary range of the feature of the data used for generation of the machine learning model as a result of performing the bounds checking.

According to an embodiment, the determining unit may perform an F-test and a T-test with respect to the feature of the new data and the feature of the usage data, when the number of pieces of the new data is greater than or equal to the reference number.

According to an embodiment, the determining unit excludes the new data from training of the machine learning model, when a result value obtained by performing the F-test and a result value obtained by performing the T-test are greater than or equal to a threshold value.

According to an embodiment, the determining unit may determine whether to apply the new data to the machine learning model by performing bounds checking and a trend test with respect to the feature of the new data and the feature of the data used for generation of the machine learning model, when a result value obtained by performing the F-test and the T-test is less than a threshold value.

According to an embodiment, the determining unit may apply the new data to training of the machine learning model, when determining that the feature of the new data falls within a trend range of the feature of the data used for generation of the machine learning model as a result of performing the trend test and determining that the feature of the new data falls within a boundary range of the feature of the data used for generation of the machine learning model as a result of performing the bounds checking.

According to an embodiment, the machine learning training apparatus may further include a machine learning model training unit configured to train the machine learning model by applying the new data to the machine learning model based on a determination result of the determining unit.

According to another aspect of the present disclosure, there is provided an operating method of a machine learning training apparatus, the operating method including collecting new data, extracting a feature of data used for generation of a machine learning model and a feature of the new data, determining whether a number of pieces of the new data is less than a reference number, and determining whether to apply the new data to the machine learning model using different methods according to the number of pieces of the new data.

According to an embodiment, the determining of whether to apply the new data to the machine learning model using different methods according to the number of pieces of the new data may include, when the number of pieces of the new data is less than the reference number, determining whether to apply the new data to the machine learning model by performing bounds checking and a trend test with respect to the feature of the new data and the feature of the data used for generation of the machine learning model.

According to an embodiment, the determining of whether to apply the new data to the machine learning model using different methods according to the number of pieces of the new data may include, when the number of pieces of the new data is greater than or equal to the reference number, performing an F-test and a T-test on the data used for generation of the machine learning model and the new data.

According to an embodiment, the determining of whether to apply the new data to the machine learning model using different methods according to the number of pieces of the new data may include excluding the new data from training of the machine learning model, when a result value obtained by performing the F-test and a result value obtained by performing the T-test are greater than or equal to a threshold value.

According to an embodiment, the determining of whether to apply the new data to the machine learning model using different methods according to the number of pieces of the new data may include determining whether to apply the new data to the machine learning model by performing bounds checking and a trend test with respect to the feature of the new data and the feature of the data used for generation of the machine learning model, when a result value obtained by performing the F-test and the T-test is less than a threshold value.

**[ADVANTAGEOUS EFFECTS]**

With a machine learning training apparatus and an operating method thereof according to an embodiment disclosed herein, an error of a machine learning model may be reduced and a reliability of the machine learning model may be improved.

**[DESCRIPTION OF DRAWINGS]**

FIG. 1 is a block diagram of a machine learning training apparatus according to an embodiment disclosed herein.
FIG. 2 is a flowchart showing an operating method of a machine learning training apparatus according to an embodiment disclosed herein.
FIG. 3 is a flowchart showing an operating method of a machine learning training apparatus according to another embodiment disclosed herein.
FIG. 4 is a graph showing a difference change in a feature of data used for generation of a machine learning model or new data over time, according to an embodiment disclosed herein.
FIG. 5 is a graph showing linear term and constant term drift coefficient value obtained from a graph showing a change in a feature of data used for generation of a machine learning model, according to an embodiment disclosed herein.

FIG. 6 is a three-dimensional (3D) graph showing a drift coefficient value obtained from a graph showing a change in a feature of data used for generation of a machine learning model, according to an embodiment disclosed herein.

**[MODE FOR INVENTION]**

Hereinafter, some embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These term is used merely for distinguishing one component from another component and does not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present document.

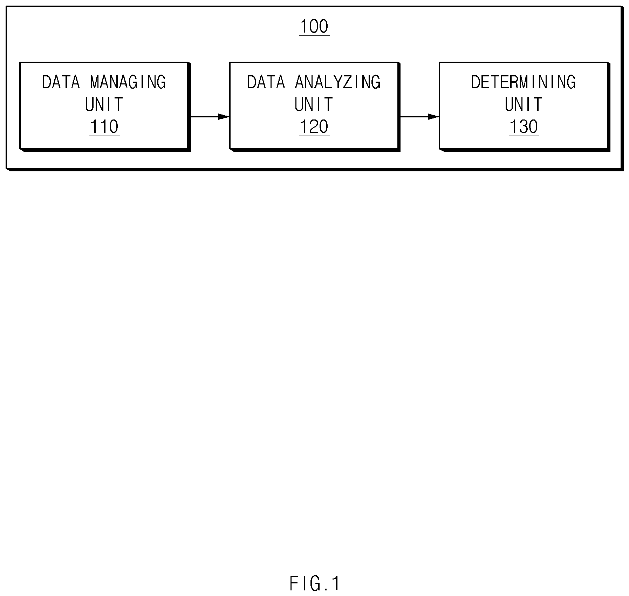

FIG. 1 is a block diagram of a machine learning training apparatus according to an embodiment disclosed herein.

Referring to FIG. 1, a machine learning training apparatus 100 according to an embodiment disclosed herein may include a data managing unit 110, a data analyzing unit 120, and a determining unit 130.

The data managing unit 110 may manage data used for a machine learning model. The data managing unit 110 may store data (hereinafter, referred to as 'usage data') used for generation of the machine learning model. The data managing unit 110 may also collect new data to be input to the machine learning model. For example, usage data may be defined as a value that records a change in the amount of electricity from a discharge state of a certain battery cell among a plurality of battery cells to a full charge state of the certain battery cell or from the full charge state to the discharge state. For example, new data may be defined as a value that records a change in the amount of electricity from a discharge state of a battery cell that is different from the certain battery cell among the plurality of battery cells to a full charge state of the battery cell or from the full charge state to the discharge state.

In addition, for example, the usage data may be defined as a value that records a change in a voltage and/or a current of a certain battery cell among a plurality of battery cells, and the new data may be defined as a value that records a change in a voltage and/or a current of a battery cell that is different from the certain battery cell among the plurality of battery cells. Herein, the discharge state may include a case where a voltage of a battery is less than a reference value (e.g., a cut-off voltage).

The data analyzing unit 120 may extract features of the usage data and the new data. Herein, the feature may mean refer to individual and measurable experiential attribute found in time series data arranged at constant time intervals over time. For example, the feature may include a capacity of the battery. Herein, the capacity of the battery may mean the amount of electricity that may be stored in the battery, and capacity data of the battery may be calculated from the usage data and the new data.

The determining unit 130 may determine whether the number of pieces of the new data is less than a reference number. Herein, the reference number may be defined as a criterion for determining whether to treat the new data as one group or as individual pieces of data. For example, the determining unit 130 may treat the new data as individual pieces of data when the number of pieces of the new data is less than 10, and as one group when the number of pieces of the new data is greater than or equal to 10.

The determining unit 130 may determine whether to apply the new data to the machine learning model by using different methods according to the number of pieces of the new data. For example, the determining unit 130 may determine whether the new data is appropriate for being input to the machine learning model by comparison between groups, when the number of pieces of the new data is greater than or equal to the reference number. As such, by filtering new data that is not appropriate for being input to the machine learning model through comparison between a new data group and a usage data group, it is possible to reduce the number of additional tests for checking if the new data is appropriate as data to be individually input to the machine learning model.

That is, the determining unit 130 may perform an inter-group comparison test for the new data and the usage data, and perform an additional test regarding whether data satisfying a certain condition is appropriate as the data to be individually input to the machine learning model. The determining unit 130 may also perform a test for checking if each of the pieces of the new data is appropriate as the data to be individually input to the machine learning model.

The determining unit 130 may determine through such a test whether the new data is appropriate as representative data of a group to be determined through the machine learning model.

The determining unit 130 may exclude inappropriate data from a prediction process using the machine learning model. Thus, the determining unit 130 may reduce an error of the machine learning model and improve the reliability of the machine learning model.

The determining unit 130 may perform bounds checking and a trend test with respect to a feature of the new data and a feature of the usage data, when the number of pieces of the new data is less than the reference number.

The determining unit 130 may perform an F-test and a T-test with respect to the feature of the new data and the feature of the usage data, when the number of pieces of the new data is greater than or equal to the reference number.

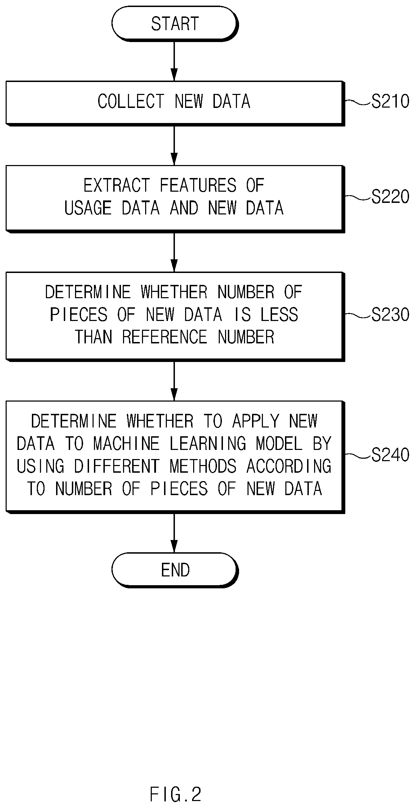

FIG. 2 is a flowchart showing an operating method of a machine learning training apparatus according to an embodiment disclosed herein.

Referring to FIG. 2,the operating method of the machine learning training apparatus according to an embodiment disclosed herein may include operation S210 of collecting new data, operation S220 of extracting features of usage data and the new data, operation S230 of determining whether the number of pieces of the new data is less than a reference number, and operation S240 of determining whether to apply the new data to a machine learning model by using different methods according to the number of pieces of the new data.

Hereinbelow, operations S210 through S240 will be described in detail with reference to FIG. 1.

In operation S210, the data managing unit 110 may collect new data to be input to the machine learning model. For example, usage data may be defined as a value that records a change in the amount of electricity from a discharge state of a certain battery cell among a plurality of battery cells to a full charge state of the certain battery cell or from the full charge state to the discharge state. For example, new data may be defined as a value that records a change in the amount of electricity from a discharge state of a battery cell that is different from the certain battery cell among the plurality of battery cells to a full charge state of the battery cell or from the full charge state to the discharge state.

In addition, for example, the usage data may be defined as a value that records a change in a voltage and/or a current of a certain battery cell among a plurality of battery cells, and the new data may be defined as a value that records a change in a voltage and/or a current of a battery cell that is different from the certain battery cell among the plurality of battery cells. Herein, the discharge state may include a case where a voltage of a battery is less than a reference value (e.g., a cut-off voltage).

In operation S220, the data analyzing unit 120 may extract features of the usage data and the new data.

For example, the feature may include a capacity of the battery. Herein, the capacity of the battery may mean the amount of electricity that may be stored in the battery, and capacity data of the battery may be calculated from the usage data and the new data.

In operation S230, the determining unit 130 may determine whether the number of pieces of the new data is less than the reference number. Herein, the reference number may be defined as a criterion for determining whether to treat the new data as one group or as individual pieces of data. For example, in operation S230, the determining unit 130 may treat the new data as individual pieces of data when the number of pieces of the new data is less than 10, and as one group when the number of pieces of the new data is greater than or equal to 10.

In operation S240, the determining unit 130 may determine whether to apply the new data to the machine learning model by using different methods according to the number of pieces of the new data.

For example, in operation S240, the determining unit 130 may perform bounds checking and a trend test to determine whether the new data is appropriate as data to be input to the machine learning model, when the number of pieces of the new data is less than the reference number. In operation S240, the determining unit 130 may perform an F-test and a T-test to determine whether the new data is appropriate as data to be input to the machine learning model, when the number of pieces of the new data is greater than or equal to the reference number.

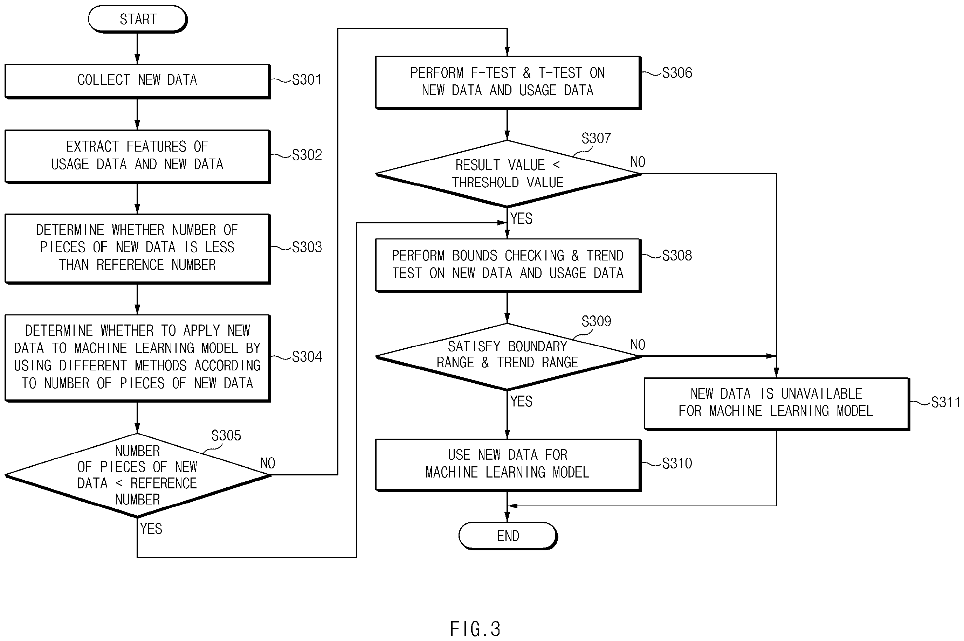

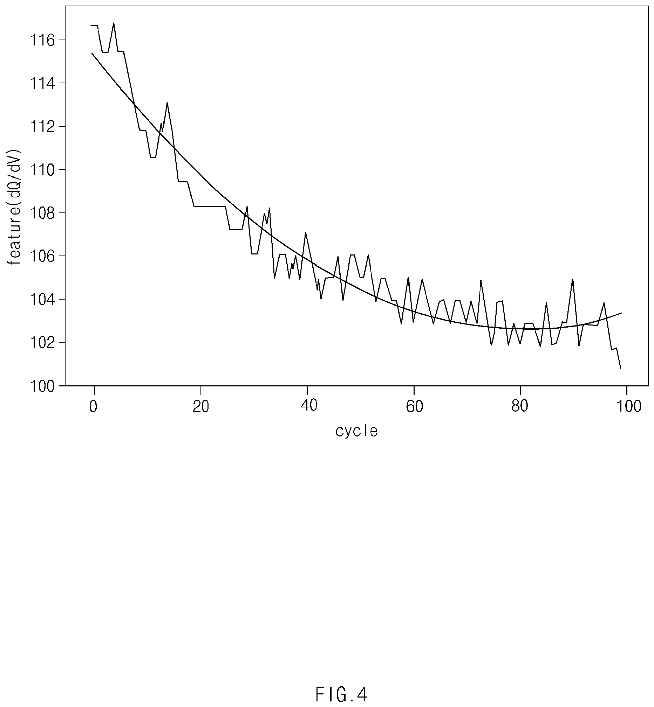

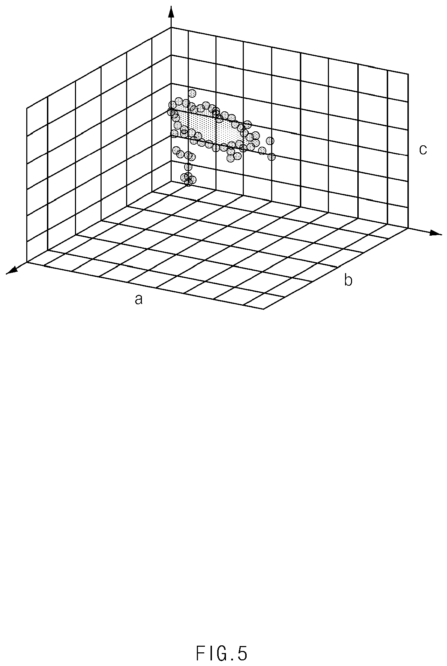

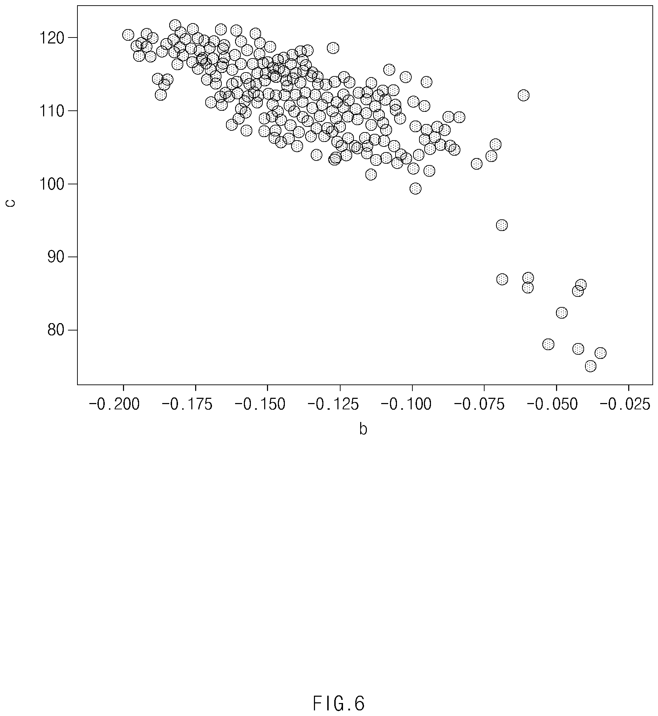

FIG. 3 is a flowchart showing an operating method of a machine learning training apparatus according to another embodiment disclosed herein. FIG. 4 is a graph showing a in change in a feature of usage data or new data over time, according to an embodiment disclosed herein. FIG. 5 is a graph showing linear term and constant term drift coefficient value obtained from a graph showing a change in a feature of usage data, according to an embodiment disclosed herein. FIG. 6 is a three-dimensional (3D) graph showing a drift coefficient value obtained from a graph showing a change in a feature of usage data, according to an embodiment disclosed herein.

First, referring to FIG. 3, an operating method of a machine learning training apparatus according to an embodiment disclosed herein may include operation S301 of collecting new data, operation S302 of extracting features of usage data and new data, operation S303 of determining whether the number of pieces of new data is less than a reference number, operation S304 of determining whether to apply the new data to a machine learning model by using different methods according to the number of pieces of the new data, operation S305 of determining whether the number of pieces of the new data is less than or greater than or equal to the reference number, operation S306 of performing an F-test and a T-test on the usage data and the new data when the number of pieces of the new data is greater than or equal to the reference number, operation S307 of determining whether a result value obtained by performing the F-test and the T-test is less than a threshold value, operation S308 of performing bounds checking and a trend test with respect to a feature of the new data and a feature of the usage data, when the number of pieces of the new data is less than the reference number or the result value obtained by performing the F-test and the T-test is less than the threshold value, operation of S309 of determining whether the new data satisfies a boundary range or a trend range of the usage data as a result of the bounds checking and the trend test, operation S310 of using the new data for the machine learning model when the new data satisfies the boundary range and the trend range, and operation S311 of excluding the new data from training of the machine learning model when the result value obtained by performing the F-test or the T-test is greater than the threshold value or when the new data fails to satisfy the boundary range or the trend range of the usage data.

Hereinbelow, operations S301 through S311 will be described in detail with reference to FIG. 1.

In operation S301, the data managing unit 110 may collect new data to be input to the machine learning model.

In operation S302, the data analyzing unit 120 may extract features of the usage data and the new data.

In operation S303, the determining unit 130 may determine whether the number of pieces of the new data is less than the reference number.

In operation S304, the determining unit 130 may determine whether to apply the new data to the machine learning model by using different methods according to the number of pieces of the new data.

In operation S305, the determining unit 130 may determine whether the number of pieces of the new data is less than or greater than or equal to the reference number.

In operation S306, the determining unit 130 may perform the F-test and the T-test with respect to the new data and the usage data, when the number of pieces of the new data is greater than or equal to the reference number.

The F-test is a verification technique that verifies the statistical significance of a difference in variance between two groups at a statistically significant level.

Equation 1 may mean an equation for obtaining a variance difference between two groups through the F-test.

[Equation 1]

$$F\text{-}test: \frac{\sum(a\text{-}a\times mean(a))^2}{n_a\text{-}1} \Big/ \frac{\sum(b\text{-}b\times mean(b))^2}{n_b\text{-}1}$$

In Equation 1, a indicates the feature of the new data. mean(a) indicates an average of features of the new data. $n_a$ indicates the number of features of the new data. b indicates the feature of the usage data. mean(b) indicates an average of features of the usage data. $n_b$ indicates the number of features of the usage data.

The T-test is a verification technique that verifies the statistical significance of a difference in mean between two groups at a statistically significant level.

Equation 2 may mean an equation for obtaining a mean difference between two groups through the T-test.

[Equation 2]

$$Ttest:(mean(a)\text{-}mean(b))/\Big(\sqrt{\frac{1}{n_a}+\frac{1}{n_b}}\times\sqrt{\frac{(n_a\text{-}1)\times var(a)+(n_b\text{-}1)\times var(b)}{n_a+n_b\text{-}2}}$$

In Equation 2, a indicates the feature of the new data. mean(a) indicates the average of the features of the new data. $n_a$ indicates the number of features of the new data. var(a) indicates a variance of the features of the new data. b indicates the feature of the usage data. mean(b) indicates an average of features of the usage data. $n_b$ indicates the number of features of the usage data. var(b) indicates a variance of the features of the usage data.

Statistical significance may be defined as a method by which a statistician determines whether his or her experimental results accidentally occur or are extreme that may not happen by chance. For example, when a P-value that is a result value of the F-test and the T-test is greater than or equal to the threshold value, the P-value may be determined to be meaningful, and when the P-value is less than the threshold value, the P-value may be determined to be meaningless.

In operation S307, the determining unit 130 may determine whether a result value obtained by performing the F-test and a result value obtained by performing the T-test are less than the threshold value. Herein, the threshold value may be defined as a criterion for determining 'abnormality' because an extreme result is output from the machine learning model. That is, the threshold value may be defined as a criterion indicating a degree to which data contradicts a particular statistical model. For example, the threshold value may be set to, but not limited to, 0.05, but is not limited thereto, and may be set slightly according to a statistically experimental result.

In operation S308, the determining unit 130 may perform bounds checking and a trend test with respect to the features of the new data and the usage data, when the result value obtained by performing the F-test and the result value obtained by performing the T-test are less than the threshold value.

In operation S308, the determining unit 130 may perform bounds checking and the trend test with respect to the feature of the new data and the feature of the data used for generation of the machine learning model, when the number of pieces of the new data is less than the reference number. Here, the bounds checking may include range checking for determining whether data exists in a particular range. For example, it may be individually determined for each piece of the new data whether a minimum value and a maximum value of the feature of the new data fall within a minimum and maximum range of the feature of the usage data. As a result of bounds checking, the determining unit 130 may determine that the new data satisfies the boundary range of the usage data when the minimum value and the maximum value of the feature of the new data fall within the minimum and maximum range of the feature of the usage data.

In the trend test, a trend may mean a gradual and continuous change of time series data for a long term. That is, the trend may mean a state of an upward trend or a downward trend in the time series data. For example, when charging, resting, discharging, and resting of a battery are referred to as a cycle, a gradual change in the capacity of the battery appearing as the cycle of the battery repeats may be referred to as the trend. The trend test may determine whether a coefficient of an equation obtained from the graph indicating the change in the feature of the new data falls within a range of a coefficient of an equation obtained from the graph indicating the change in the feature of the usage data.

The determining unit 130 may individually approximate the new data and the usage data by designating an X axis as time and a Y axis as a feature of data. The determining unit 130 may derive the graph as shown in FIG. 4 by approximating the usage data and the new data.

Referring to FIG. 4, a graph showing a feature of the battery (i.e., a capacity trend of the battery) appearing as the cycle of the battery repeats is shown. Here, the data may be the usage data or the new data.

The determining unit 130 may define a coefficient of a quadratic function equation obtained from the graph based on approximation, as a trend coefficient. A quadratic coefficient of the quadratic function equation may be indicated by a, a linear term coefficient may be indicated by b, and a constant term coefficient may be indicated by c.

Referring to FIG. 5, linear term and constant term coefficients obtained from the graph shown in FIG. 4 are shown.

Referring to FIG. 6, the determining unit 130 may show trend coefficients a, b, and c of the feature of the usage data in a 3D graph. The determining unit 130 may individually determine whether the trend coefficient of the feature of the new data falls within the range of the trend coefficient of the feature of the usage data shown in the 3D graph. As a result of the trend test, the determining unit 130 may determine that the trend range is satisfied when the trend coefficient of the feature of the new data falls within the range of the trend coefficient of the usage data.

Referring to FIG. 6, a 3D graph showing the trend coefficient of the usage data obtained from the graph showing the feature of the data (i.e., the capacity trend of the battery) appearing as the cycle of the battery repeats is shown.

Referring back to FIG. 3, in operation S309, as a result of bounds checking and the trend test, the determining unit 130 may determine whether the new data satisfies the boundary range and the trend range of the usage data.

In operation S310, the determining unit 130 may use the new data for the machine learning model when the new data satisfies both the boundary range and the trend range.

In operation S311, the determining unit 130 may exclude the new data from training of the machine learning model, when a result value obtained by performing the F-test and a result value obtained by performing the T-test are greater than or equal to the threshold value.

In operation S311, the determining unit 130 may exclude the new data from training of the machine learning model when the new data fails to satisfy the boundary range or the trend range of the usage data by performing the bounds checking and the trend test.

The above description is merely illustrative of the technical idea of the present disclosure, and various modifications and variations will be possible without departing from the essential characteristics of the present disclosure by those of ordinary skill in the art to which the present disclosure pertains.

Therefore, the embodiments disclosed in the present disclosure are intended for description rather than limitation of the technical spirit of the present disclosure and the scope of the technical spirit of the present disclosure is not limited by these embodiments. The protection scope of the present disclosure should be interpreted by the following claims, and all technical spirits within the same range should be understood to be included in the range of the present disclosure.

## Claims

1. A machine learning training apparatus, comprising:

a data managing unit configured to collect new data;
a data analyzing unit configured to extract a feature of data used for generation of a machine learning model and a feature of the new data; and
a determining unit configured to:

determine whether a number of pieces of the new data is less than a reference number, and
determine whether to apply the new data to the machine learning model using different methods according to the number of pieces of the new data.

2. The machine learning training apparatus of claim 1, wherein when the number of pieces of the new data is less than the reference number, the determining unit determines whether to apply the new data to the machine learning model by performing bounds checking and a trend test with respect to the feature of the new data and the feature of the data used for generation of the machine learning model.

3. The machine learning training apparatus of claim 2, wherein the trend test determines whether a coefficient of an equation obtained from a graph showing a change in the feature of the new data over time falls within a range of a coefficient of an equation obtained from a graph showing a change in the feature of the data used for generation of the machine learning model.

4. The machine learning training apparatus of claim 2, wherein the determining unit applies the new data to training of the machine learning model, when determining that the feature of the new data falls within a trend range of the feature of the data used for generation of the machine learning model as a result of performing the trend test and determining that the feature of the new data falls within a boundary range of the feature of the data used for generation of the machine learning model as a result of performing the bounds checking.

5. The machine learning training apparatus of claim 1, wherein when the number of pieces of the new data is greater than or equal to the reference number, the determining unit performs an F-test and a T-test on the data used for generation of the machine learning model and the new data.

6. The machine learning training apparatus of claim 5, wherein the determining unit excludes the new data from training of the machine learning model, when a result value obtained by performing the F-test and a result value obtained by performing the T-test are greater than or equal to a threshold value.

7. The machine learning training apparatus of claim 5, wherein the determining unit determines whether to apply the new data to the machine learning model by performing bounds checking and a trend test with respect to the feature of the new data and the feature of the data used for generation of the machine learning model, when a result value obtained by performing the F-test and the T-test is less than a threshold value.

8. The machine learning training apparatus of claim 7, wherein the determining unit applies the new data to training of the machine learning model, when determining that the feature of the new data falls within a trend range of the feature of the data used for generation of the machine learning model as a result of performing the trend test and determining that the feature of the new data falls within a boundary range of the feature of the data used for generation of the machine learning model as a result of performing the bounds checking.

9. The machine learning training apparatus of claim 1, further comprising a machine learning model training unit configured to train the machine learning model by applying the new data to the machine learning model based on a determination result of the determining unit.

10. An operating method of a machine learning training apparatus, the operating method comprising:

collecting new data;
extracting a feature of data used for generation of a machine learning model and a feature of the new data;
determining whether a number of pieces of the new data is less than a reference number; and
determining whether to apply the new data to the machine learning model using different methods according to the number of pieces of the new data.

11. The operating method of claim 10, wherein the determining of whether to apply the new data to the machine learning model using different methods according to the number of pieces of the new data comprises:

when the number of pieces of the new data is less than the reference number, determining whether to apply the new data to the machine learning model by performing bounds checking and a trend test with respect to the feature of the new data and the feature of the data used for generation of the machine learning model.

12. The operating method of claim 10, wherein the determining of whether to apply the new data to the machine learning model using different methods according to the number of pieces of the new data comprises:
when the number of pieces of the new data is greater than or equal to the reference number, performing an F-test and a T-test on the data used for generation of the machine learning model and the new data.

13. The operating method of claim 12, wherein the determining of whether to apply the new data to the machine learning model using different methods according to the number of pieces of the new data comprises:
excluding the new data from training of the machine learning model, when a result value obtained by performing the F-test or a result value obtained by performing the T-test are greater than or equal to a threshold value.

14. The operating method of claim 12, wherein the determining of whether to apply the new data to the machine learning model using different methods according to the number of pieces of the new data comprises:
determining whether to apply the new data to the machine learning model by performing bounds checking and a trend test with respect to the feature of the new data and the feature of the data used for generation of the machine learning model, when a result value obtained by performing the F-test and the T-test is less than a threshold value.

100

| DATA MANAGING UNIT 110 | → | DATA ANALYZING UNIT 120 | → | DETERMINING UNIT 130 |

FIG.1

```
                    ┌──────────────┐
                    │    START     │
                    └──────────────┘
                           │
                           ▼
        ┌───────────────────────────────────┐
        │         COLLECT NEW DATA          │──── S210
        └───────────────────────────────────┘
                           │
                           ▼
        ┌───────────────────────────────────┐
        │         EXTRACT FEATURES OF       │──── S220
        │       USAGE DATA AND NEW DATA     │
        └───────────────────────────────────┘
                           │
                           ▼
        ┌───────────────────────────────────┐
        │   DETERMINE WHETHER NUMBER OF     │
        │    PIECES OF NEW DATA IS LESS     │──── S230
        │      THAN REFERENCE NUMBER        │
        └───────────────────────────────────┘
                           │
                           ▼
        ┌───────────────────────────────────┐
        │   DETERMINE WHETHER TO APPLY NEW  │
        │  DATA TO MACHINE LEARNING MODEL BY│
        │  USING DIFFERENT METHODS ACCORDING│──── S240
        │   TO NUMBER OF PIECES OF NEW DATA │
        └───────────────────────────────────┘
                           │
                           ▼
                    ┌──────────────┐
                    │     END      │
                    └──────────────┘
```

FIG.2

```
                    START

COLLECT NEW DATA  ─S301          PERFORM F-TEST & T-TEST ON  ─S306
                                   NEW DATA AND USAGE DATA

EXTRACT FEATURES OF  ─S302                    S307
USAGE DATA AND NEW DATA                RESULT VALUE <        NO
                                        THRESHOLD VALUE

DETERMINE WHETHER NUMBER OF  ─S303            YES
PIECES OF NEW DATA IS LESS
THAN REFERENCE NUMBER            PERFORM BOUNDS CHECKING & TREND  ─S308
                                  TEST ON NEW DATA AND USAGE DATA

DETERMINE WHETHER TO APPLY NEW                S309
DATA TO MACHINE LEARNING MODEL BY      SATISFY BOUNDARY        NO
USING DIFFERENT METHODS ACCORDING  ─S304  RANGE & TREND RANGE
TO NUMBER OF PIECES OF NEW DATA
                                              YES        NEW DATA IS UNAVAILABLE  ─S311
              S305                                        FOR MACHINE LEARNING MODEL
        NUMBER
    OF PIECES OF NEW    NO         USE NEW DATA FOR  ─S310
    DATA < REFERENCE              MACHINE LEARNING MODEL
       NUMBER
         YES                              END
```

FIG.3

FIG.4

FIG.5

FIG.6

## INTERNATIONAL SEARCH REPORT

| International application No. |
|---|
| **PCT/KR2021/018552** |

**A.    CLASSIFICATION OF SUBJECT MATTER**

**G06N 20/00**(2019.01)i; **G06N 5/02**(2006.01)i

According to International Patent Classification (IPC) or to both national classification and IPC

**B.    FIELDS SEARCHED**

Minimum documentation searched (classification system followed by classification symbols)

G06N 20/00(2019.01); G06F 16/35(2019.01); G06F 7/58(2006.01); G06N 20/20(2019.01); G06N 3/04(2006.01); G06N 3/08(2006.01); G06N 5/02(2006.01); H04L 29/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 머신러닝(machine learning), 학습(training), 신규 데이터(new data), 경계 검사 (bounds checking), 추세 검사(trend test), 특성(feature)

**C.    DOCUMENTS CONSIDERED TO BE RELEVANT**

| Category* | Citation of document, with indication, where appropriate, of the relevant passages | Relevant to claim No. |
|---|---|---|
| Y | WO 2020-124037 A1 (DATAROBOT, INC.) 18 June 2020 (2020-06-18)<br>See paragraphs [0096] and [0125]-[0126]; and claim 1. | 1-14 |
| Y | KR 10-2033136 B1 (LUNIT INC.) 16 October 2019 (2019-10-16)<br>See paragraphs [0057], [0069], [0071] and [0074]-[0075]; and figure 9. | 1-14 |
| Y | WO 2020-028036 A1 (D5AI LLC.) 06 February 2020 (2020-02-06)<br>See paragraph [0079]; and figure 1. | 5-8,12-14 |
| A | KR 10-2128056 B1 (LUNIT INC.) 07 July 2020 (2020-07-07)<br>See claims 1-4. | 1-14 |
| A | CN 111915004 A (PINHOLE (BEIJING) TECHNOLOGY CO., LTD. et al.) 10 November 2020 (2020-11-10)<br>See claim 1. | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 March 2022** | **21 March 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/018552**

| Patent document cited in search report | | | Publication date (day/month/year) | Patent family member(s) | | | Publication date (day/month/year) |
|---|---|---|---|---|---|---|---|
| WO | 2020-124037 | A1 | 18 June 2020 | AU | 2019-398468 | A1 | 15 July 2021 |
| | | | | EP | 3895096 | A1 | 20 October 2021 |
| | | | | KR | 10-2021-0145126 | A | 01 December 2021 |
| | | | | SG | 11202106314 | A | 29 July 2021 |
| | | | | US | 2021-0103580 | A1 | 08 April 2021 |
| KR | 10-2033136 | B1 | 16 October 2019 | | None | | |
| WO | 2020-028036 | A1 | 06 February 2020 | US | 2020-0410090 | A1 | 31 December 2020 |
| KR | 10-2128056 | B1 | 07 July 2020 | KR | 10-2052624 | B1 | 05 December 2019 |
| CN | 111915004 | A | 10 November 2020 | | None | | |

Form PCT/ISA/210 (patent family annex) (July 2019)

**REFERENCES CITED IN THE DESCRIPTION**

**Patent documents cited in the description**

- KR 1020200182652